Europäisches Patentamt

European Patent Office

Office européen des brevets

(11) Publication number: **0 399 970**
**A1**

## (12) EUROPEAN PATENT APPLICATION

(21) Application number: **90850156.2**

(22) Date of filing: **24.04.90**

(51) Int. Cl.⁵: **G03B 27/50, G03B 27/62,**
**G03G 15/00**

(30) Priority: **24.05.89 JP 128940/89**

(43) Date of publication of application:
**28.11.90 Bulletin 90/48**

(84) Designated Contracting States:
**DE FR GB**

(71) Applicant: **International Business Machines**
**Corporation**
**Old Orchard Road**

**Armonk, N.Y. 10504(US)**

(72) Inventor: **Fujino, Takane**
**3-11-23 Honkugenuma**
**Fujisawa-shi, Kanagawa-ken(JP)**

(74) Representative: **Johansson, Lars E. et al**
**IBM Svenska AB, SW Intellectual Property**
**Dept.**
**S-163 92 Stockholm(SE)**

(54) **Image scan apparatus.**

(57) An image scanning apparatus comprises a simple document feed mechanism. An image sensing unit including a light source and an image sensor is reciprocally moved between a home position and a scan starting position. The document feed mechanism is mechanically connected to the image sensing unit and moved along with the sensing unit. The document feed mechanism includes a frictional roller which contacts with a glass platen, on which an image bearing surface is faced down, and is coupled to a shaft through a one-way clutch. The one-way clutch inhibits the rotation of the roller during the movement from the home position to the scan starting position and allows the rotation during the movement from the scan starting position to the home position. At the home position, the leading edge of the document is inserted by an operator between the frictional roller and the glass platen. The document is fed or moved by the friction of the roller from the home position to the scan starting position. During the movement from the scan starting position to the home position, the roller is freely rotation on the document.

FIG. 1

## IMAGE SCAN APPARATUS

### Technical field

The invention relates to an image scan apparatus wherein a simple document feed unit for feeding a document to be scanned to a predetermined position on a glass platen is mechanically coupled to an image sense unit which is reciprocally moved between a home position and a scan start position.

### Prior art and problems

Prior mechanism for feeding a document into a predetermined position on a glass platen includes an endless rubber belt supported between two rollers, as shown in US patent 3844552. One of the rollers is driven by a drive source including a motor, gears, etc., and the other roller is freely rotated. Such feed mechanism has been widely used as a document feeder for a copying machine. In the mechanism, the wide rubber belt of a high coefficient of friction contacts with the glass platen at an initial period of the document feed, so that a power is lost. To drive the rubber belt with overcoming the power loss, a relatively powerful drive source is mounted within the feed mechanism, so that the size and weight of the feed mechanism is large, and the cost is high.

A small size and low cost image scan apparatus has been developed, which senses the image of the document. Although it is preferable to provide the image scan apparatus with the document feeding mechanism, the above described large and costly feeding mechanism is not suitable for the small size and low cost image scan apparatus.

### Disclosure of invention

The present invention is defined in the attached claims.

The object of the present invention is to provide the image scan apparatus with a simple document feed unit. An image bearing surface of the document to be scanned is placed on the glass platen of the image scan apparatus. An image sense unit including a light source and image sensor such as CCD (Charge Coupled Device) image sensor is mounted within the image scan apparatus. The image sense unit is reciprocally moved. That is the image sense unit is moved from its home position to a scan start position during which the document image is not sensed, then the image sense unit is moved back from the scan start position to the home position during which the image of the document is scanned by the image sense unit. The document feed unit is mechanically coupled to the image sense unit. The document feed unit includes a frictional roller which is mounted on a fixed shaft through a one-way clutch and contacts with the glass platen, a freely rotated roller of white colour, and a document edge sensor. A leading edge of the document is inserted by an operator between the frictional roller stopped at the home position and the glass platen. The one-way clutch inhibits the rotation of the frictional roller during its movement from the home position to the scan start position, so that the leading portion of the document is caught or engaged by the non-rotated frictional roller, and the document is moved as both the image sense unit and document feed unit are moved toward the scan start position. The document is placed in a predetermined position on the glass platen when both the image sense unit and document feed unit stop at the scan start position. The one way clutch allows the rotation of the frictional roller during its movement from the scan start position to the home position, so that the frictional roller freely rotates on the document without moving the document, and the document stopped in the predetermined position is scanned by the image sense unit.

In the other aspect of the present invention, the document feed unit is mounted on a guide shaft extending in the direction of the movement of the image sense unit, and is pivoted at the home position around the guide shaft, so that the document feed unit at the home position is pivoted between a document feed position at which the document feed unit is placed on the glass platen and a raised position at which the document feed unit is raised from the glass platen. And, a means is provided which couples the document feed unit with the image sense unit or disengages the document feed unit from the image sense unit at the home position.

The invention realizes the compact and low cost document feed unit for the desk top image scan apparatus.

### Brief Description of the Drawings:

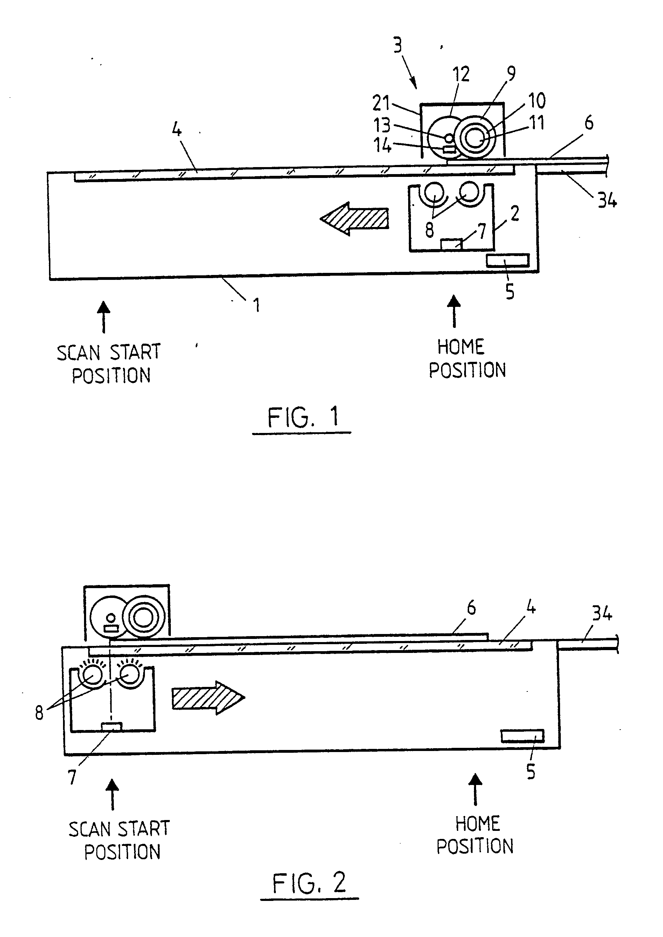

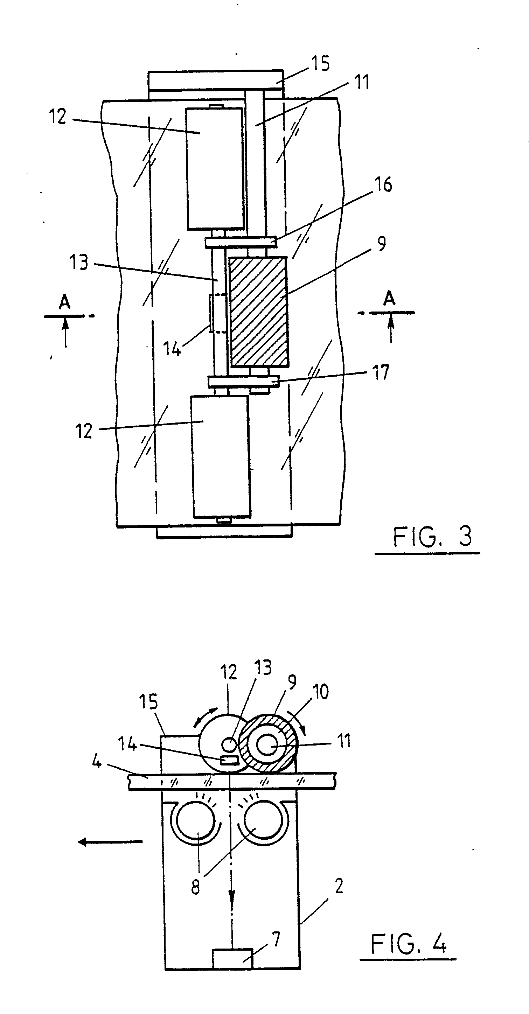

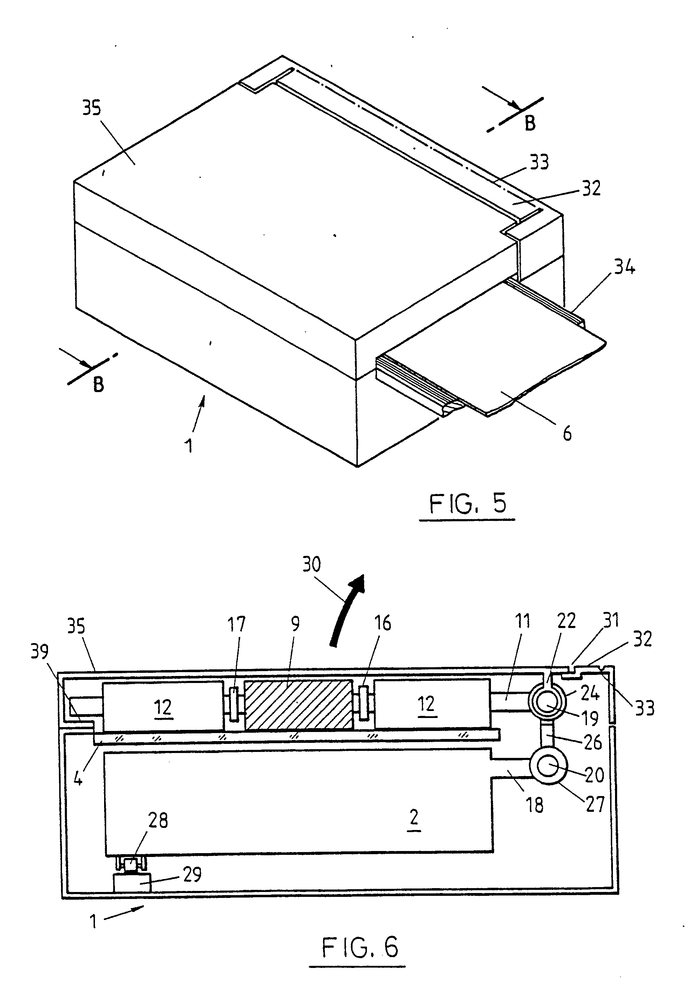

Figs. 1 and 2 show the operations of the image sense unit and the document feed unit. Figs. 3 and 4 show the detail of the document feed unit. Figs. 5, 6, 7 and 8 show another embodiment of the invention.

## Description of an embodiment of the invention

Referring to Fig. 1, an image scan apparatus 1 includes an image sense unit 2, a document feed unit 3, a glass platen 4, and a control unit 5. The image scan apparatus 1 also includes a power supply, a driving mechanism including an electric motor, guide rails, etc. for moving the image sense unit 2. But, these are not shown in the Fig. 1 for simplifying the drawing. A plate 34 is also mounted. The image sense unit 2 includes an image sensor 7, such as CCD image sensor and a light source 8. The document feed unit 3 is shown in the Figs. 1, 2, 3 and 4, and includes a frame 15, a cover 21, a shaft 11 fixed to the frame 15, a frictional roller 9 mounted on the shaft 11 through a one-way clutch or one-way bearing 10, members 16 and 17 pivotally mounted on the shaft 11, a shaft 13 mounted on the members 16 and 17, white colour rollers 12 rotatably mounted on the shaft 13, and a document edge sensor 14. The document edge sensor 14 is mounted on a support member, not shown. The frame 15 is mechanically coupled to the image sense unit 2, so that the document feed unit 3 is moved along with the image sense unit 2. That is, the document feed unit 3 does not require its own drive source. The drive force for the document feed unit 3 is supplied from the image sense unit 2 though the mechanical coupling.

The document feed unit 3 and the image sense unit 2 stay at a home position during a wait period, as shown in the Fig. 1.

Describing the document scan operations, the document 6 is inserted between the frictional roller 9 staying at the home position and the glass platen 4 by an operator, as shown in the Fig. 1. The frictional roller 9 rotates only in the clockwise direction due to the action of the one-way clutch 10, and the white rollers 12 freely rotate in both the clockwise and counter clockwise directions, whereby the leading edge of the document 6 is moved below the document edge sensor 14. The document edge sensor 14 includes a light source, such as a light emitting diode and a light sense element. When the leading edge of the document 6 is advanced to the position just below the document edge sensor 14, the light reflected from the white leading edge of the document 6 is sensed by the light sense element, and the sense signal is supplied to the control unit 5. The control unit 5 responds to the sense signal to activate the electric motor to start the movement of both the image sense unit 2 and document feed unit 3 towards the scan start position.

The one-way clutch 10 inhibits the rotation of the frictional roller 9. The frictional force between the frictional roller 9 and the document 6 is larger than the frictional force between the document 6 and the glass platen 4, so that the leading portion of the document 6 is engaged or caught by the non-rotated frictional roller 9, and the document 6 is moved on the glass platen 4 towards the scan start position as the frictional roller 9 is moved. When the image sense unit 2 reaches the scan start position, a left end position sensor, not shown, generates a sense signal. The control unit 5 responds to the sense signal to deactivate the electric motor to stop the image sense unit 2, the document feed unit 3 and the document 6 at the scan start position, whereby the document 6 is placed in the scan position. The control unit 5 activates the electric motor in an opposite direction to move both the image sense unit 2 and document feed unit 3 from the scan start position to the home position, and activates the operations of the image sense unit 2, as shown in the Fig. 2. More particularly, the light source 8 is turned on and the image sensor 7 senses the reflected light from the image of the document 6. It is noted that, during the movement towards the home position, the one-way clutch 10 allows the clockwise rotation of the frictional roller 9, so that the frictional roller 9 rotates on the document 6 without moving the document 6 from the scan position. As the image sense unit 2 and the document feed unit 3 are moved towards the home position, the image of the document 6 is sensed by the image sense unit 2. When the image sense unit 2 reaches the home position, a right end position sensor, not shown, generates a sense signal. The control unit 5 responds to the sense signal to deactivate the electric motor to stop both the image sense unit 2 and the document feed unit 3 at the home position. Image data representing the image of the document 6 is stored in a memory, not shown, in the control unit 5, and is utilized for the image processing. The moving speed of the units 2 and 3 from the home position's to the scan start position is about 30 cm/sec., while the scanning speed of the units 2 and 3 from the scan start position to the home position is about 15 cm/sec.

Figs. 5, 6, 7 and 8 show another embodiment wherein the document feed unit 3 is selectively coupled to the image sense unit 2. The Fig. 6 shows a cross section viewed at a dotted line B in the Fig. 5. A cover 35 is pivotally mounted on a guide shaft 19 through a member 22 and a coupling sleeve 23 at the right side and left side of the image scan apparatus 1. The guide shaft 19 and 20 extend in the direction of the movement of the image sense unit 2 and are fixedly mounted on a frame, not shown, of the image scan apparatus 1. The shaft 11 of the document feed unit 3 is attached to a sliding sleeve 24 which is slidably mounted on the guide shaft 19. A tab 25 extends from the sliding sleeve 24. The tab 25 selectively engages with a receiving member 26 extending from a sliding sleeve 27 which is slidably mounted on the guide shaft 20. A support member 18 couples the sliding sleeve 27 to the image sense unit 2. A roller 28 is mounted on the bottom of the image sense unit 2 to support the image sense unit 2 on a rail 29.

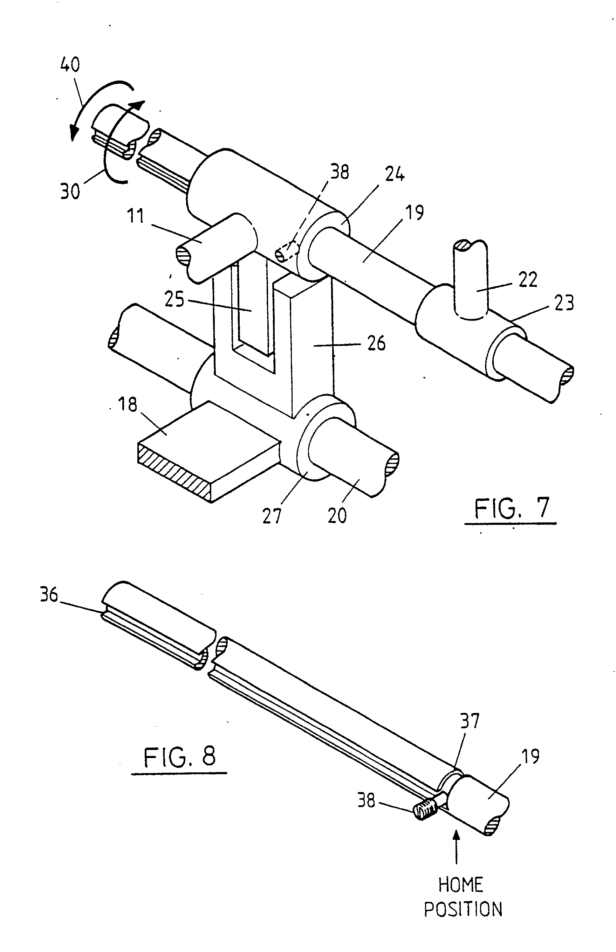

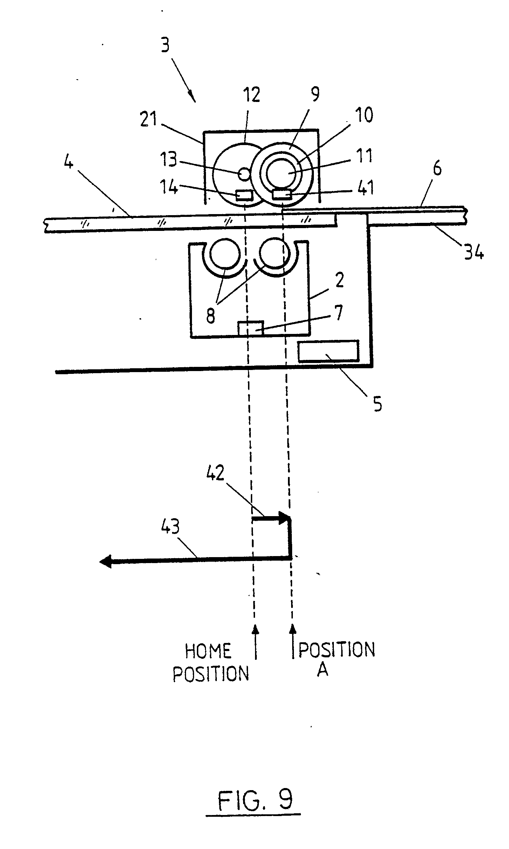

Referring to the Figs. 7 and 8, a horizontal channel 36 is formed in the guide shaft 19, and a channel 37 is extended from the channel 36. The channel 37 is formed in the circumference of the guide shaft 19. The channel 37 continues to the right end of the channel 36. A screw 38 is mounted in the sliding sleeve 24 and is extended to the channel, as shown in the Fig. 8. The channel 37 is formed at the home position of the image sense unit 2 and the document feed unit 3, and the screw 38 is positioned in the right end of the channel 36 when both the units 2 and 3 are positioned at the home position.

When the cover 35 is closed and the image sense unit 2 is positioned at the home position, the frictional roller 9 and the white rollers 12 are placed on the glass platen 4, as shown in the Fig. 6, the tab 25 of the document feed unit 3 engages with the receiving member 26 of the image sense unit 2, and the screw 38 is positioned in the right end of the channel 36 and the lower most end of the channel 37.

When the document 6 is inserted by the operator, the image sense unit 2 is moved from the home position to the scan start position and the document feed unit 3 is also moved together with the image sense unit 2, and the leading edge portion of the document 6 is caught by the non-rotated frictional roller 9 and is moved to the scan position on the glass platen 4. And, both the units 2 and 3 are moved from the scan start position to the home position to scan the document 6 staying in the scan position on the glass platen 4. And, both the units 2 and 3 are stopped at the home position.

When the cover 35 is opened to scan a book, a portion 39 of the cover 35 engages with the left end of the shaft 11, and the screw 38 of the sleeve 24 is moved in the channel 37, and the document feed unit 3 is pivoted around the guide shaft 19 in the clockwise direction, as indicated by an arrow 30 in the Figs. 6 and 7, so that the tab 25 of the document feed unit 3 is disengaged from the receiving member 26 of the image sense unit 2. A counter balance, not shown, for keeping the cover 35 and the document feed unit 3 in the raised position is mounted within the image scan apparatus 1. During the scan operations of the book type document the document feed unit 3 is not moved. When the scan operations of the book type document have been completed, the image sense unit 2 and its receiving member 26 are stopped at the home position, and the cover 35 and the document feed unit 3 are rotated in the clockwise direction, as shown by an arrow 40, and the screw 38 is moved in the channel 37, and the tab 25 of the document feed unit 3 is engaged with the receiving member 26 of the image sense unit 2. Referring to the Figs. 5 and 6, a portion 32 is provided which is pivotally moved around a recess 33. When the cover 35 is opened, an end portion 31 of the cover 35 moves the portion 32 in the counter clockwise direction around the recess 33. The engagement of the cover 35 and the portion 32 prevents dusts from being introduced into the apparatus 1.

Fig. 8 show another embodiment of the present invention wherein an additional document edge sensor 41 is mounted. The document edge sensor 41 is the same as the document edge sensor 14. When the leading edge of the document 6 inserted by the operator reaches a position A, the document edge sensor 6 generates a sense signal which is supplied to the control unit 5. The control unit 5 responds to the sense signal to move both the image sense unit 2 and document feed unit 3 in the direction shown by an arrow 42 from the home position. During the movement, the frictional roller 9 and the white rollers 12 rotates in the clockwise direction on the document 6, and the document 6 stays in the position shown in the Fig. 8. When the document edge sensor 14 detects the leading edge of the document 6, the sensor 14 generates the sense signal. The control unit 5 responds to the sense signal to stop the movement of both the units 2 and 3 at the position A, and to start the movement of both the unit 2 and 3 in the direction shown by an arrow 43 from the position A to the scan start position. And, the document 6 caught by the non-rotated frictional roller 9 is moved to the scan position. When both the units 2 and 3 reach the scan start position, the control unit 5 stops the movement of the both units and starts the movement of both the units 2 and 3 from the scan start position to the home position. In this embodiment, the backward movement as shown by the arrow 41 is added. The purpose of the addition is to cause a thin document to be precisely caught by the frictional roller 9.

## Claims

1 Image scan apparatus comprising:
a glass platen (4) on which an image bearing surface of document is placed;
a document (6) feed means (3) including a frictional roller (9) contacting said glass platen and mounted on a shaft (11) through a one-way clutch ( 10) which inhibits the rotation of said frictional roller during its movement from a home position to a scan start position and allows the rotation of said frictional roller during its movement from said scan start position to said home position.

2 Image scan apparatus comprising:
a glass platen (4) on which an image bearing surface of a document (6) is placed;
an image sense means (2) moved between a home position and a scan start position including a light source (8) directing the light to said image bearing surface and an image sensor (7) sensing the light reflected from said image bearing surface;
a document feed means (3) coupled to said image sense means, including a frictional roller (9) contacting said glass platen and mounted on a shaft (11) through a one-way clutch (10) which inhibits the rotation of said frictional roller during its movement from said home position to said scan start position and allows the rotation of said frictional roller during its movement from said scan start position to said home position.

3 Image scan apparatus according to Claim 2, wherein said image sense means senses said image of document during the movement from said scan start position to said home position.

4 Image scan apparatus according to Claim 2, wherein said document feed means includes a freely rotated white roller and a document edge sensor.

5 Image scan apparatus according to Claim 2, wherein said document feed means is mounted on a guide shaft extended in the direction of the movement of said image sense means and is pivoted at said home position around said guide shaft between a document feed position and a raised position, and wherein means are provided for engaging said document feed means in said document feed position with said image sense means or disengaging said document feed means from said image sense means.

SCAN START
POSITION

HOME
POSITION

FIG. 1

SCAN START
POSITION

HOME
POSITION

FIG. 2

FIG. 3

FIG. 4

FIG. 5

FIG. 6

FIG. 7

FIG. 8

HOME
POSITION

EP 0 399 970 A1

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4429866 (V.CASTRO-HAHN) <br> * abstract; figures 1, 2 * <br> * claims 1-8 * <br> --- | 1-5 | G03B27/50 <br> G03B27/62 <br> G03G15/00 |
| A | US-A-4771317 (I.KATOH, ET.AL.) <br> * abstract; figures 1, 2 * <br> --- | 1-5 | |
| A | DE-A-3035731 (CANON) <br> * page 11, line 28 - page 12, line 22; figures 1A-1C * <br> ----- | 1-5 | |

TECHNICAL FIELDS SEARCHED (Int. Cl.5)

G03B
G03G

The present search report has been drawn up for all claims

| Place of search | Date of completion of the search | Examiner |
|---|---|---|
| BERLIN | 06 JULY 1990 | MANNTZ, W |

EPO FORM 1503 03.82 (P0401)